(19) Europäisches Patentamt

European Patent Office

Office européen des brevets

(11) **EP 3 156 673 A1**

(12) **EUROPEAN PATENT APPLICATION**

(43) Date of publication:
**19.04.2017 Bulletin 2017/16**

(51) Int Cl.:
*F16C 33/78* (2006.01)    *F16C 33/58* (2006.01)
*F16C 19/06* (2006.01)

(21) Application number: **15306663.4**

(22) Date of filing: **16.10.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Aktiebolaget SKF**
**415 50 Göteborg (SE)**

(72) Inventors:
• **VARNOUX, Laurent**
  **37550 SAINT-AVERTIN (FR)**
• **ZENNIR, Yannick**
  **37260 Monts (FR)**

(74) Representative: **Burö, Sven Peter et al**
**SKF B.V.**
**Kelvinbaan 16**
**3439 MT Nieuwegein (NL)**

(54) **BEARING WITH SEALING SHIELD**

(57)    The bearing comprises an inner ring 16, an outer ring and at least one shield 24 provided with an anchorage portion 24b fixed into a groove 26 formed on one of the rings. Said groove comprises a toroidal portion 26a axially offset inwards with respect to a frontal surface 16d of the said ring and in contact with the anchorage portion 24b of the shield, and an inner axial portion 26b extending inwards said toroidal portion.

FIG.1

**Description**

The present invention relates to bearings.

In a bearing, one or more seals or sealing devices are generally used to keep the lubricant, such as grease, inside the bearing and to prevent ingress of foreign matter.

International patent application WO-A1-2011/121385 (SKF) discloses a rolling bearing comprising an inner ring, an outer ring and two sealing devices to close the radial space existing between the rings. Each sealing device comprises a seal radially disposed between the rings and an annular shield fixed to the inner ring and arranged laterally to the seal so as to define a gap therebetween. An inner portion of the shield is arranged inside an annular groove made in the bore of said ring. The groove has a frustoconical form.

With manufacturing defects or large tolerances as well as grinding variations, the dimensions of the slope of such groove may be changed in axial and radial directions. This leads to an increase of controls in production to ensure that the anchorage of each shield on the inner ring is done accurately.

One aim of the present invention is to overcome this drawback.

It is a particular object of the present invention to provide a bearing which is simple to manufacture and to assembly while guaranteeing good anchorage properties of the shield(s).

In one embodiment, the bearing comprises an inner ring, an outer ring and at least one shield provided with an anchorage portion fixed into a groove formed on one of the rings. Said groove comprises a toroidal portion axially offset inwards with respect to a frontal surface of the said ring and in contact with the anchorage portion of the shield. Said groove also comprises an inner axial portion extending inwards said toroidal portion.

With such design of the groove, the contact area with the shield is increased with respect to a groove having a frustoconical form. As a matter of fact, the toroidal portion of the groove corresponds to this contact area with the shield. The anchorage of the shield on the ring is done in a sure way. Besides, the tolerances applied on the anchorage groove may be increased.

Preferably, the anchorage portion of the shield comprises a toroidal surface in contact with the toroidal portion of said groove. Accordingly, the contact zone between the shield and the groove is further increased.

In one embodiment, the radius R1 of the toroidal portion of said groove and the radius R2 of the anchorage portion of the shield in a free state of said shield are defined by:

$$0.7 \leq \frac{R1}{R2} \leq 1.5.$$

Preferably, said radii are equal.

Advantageously, the axial distance X1 between the frontal surface of the said ring and the centre of the toroidal portion of said groove, and the axial distance X2 between an inner face of the shield and the centre of the anchorage portion in a free state of said shield are defined by:

$$0.9 \leq \frac{X1}{X2} \leq 1.8.$$

In one embodiment, the diameter D2 of the anchorage portion in a free state of said shield and the diameter D1 of the outer axial portion of said groove are defined by:

$$0.9 \leq \frac{D2}{D1} \leq 1.1.$$

Preferably, said diameters are equal.

In one embodiment, said groove may further comprise an outer axial portion extending outwards the toroidal portion. The outer axial portion may extend directly from the toroidal portion.

The shield may comprise a radial abutment portion, the anchorage portion extending from said abutment portion axially towards said ring. In one embodiment, the radial abutment portion of the shield is in axial direct contact with the frontal surface of the said ring. The shield may be made in one part.

In one embodiment, the bearing further comprises at least an additional seal mounted on the other ring and which applies a dynamic sealing with said ring. Said additional seal may comprise at least a lip in friction contact with the shield.

The present invention and its advantages will be better understood by studying the detailed description of a specific embodiment given by way of a non-limiting example and illustrated by the appended drawings in which:

- Figure 1 shows an axial half-section of a rolling bearing according to an example of the invention,
- Figure 2 is a detail view showing an inner ring and a shield of the rolling bearing of Figure 1, and
- Figure 3 is an exploded view of Figure 2 showing the shield in a free state, i.e. not mounted on the inner ring.

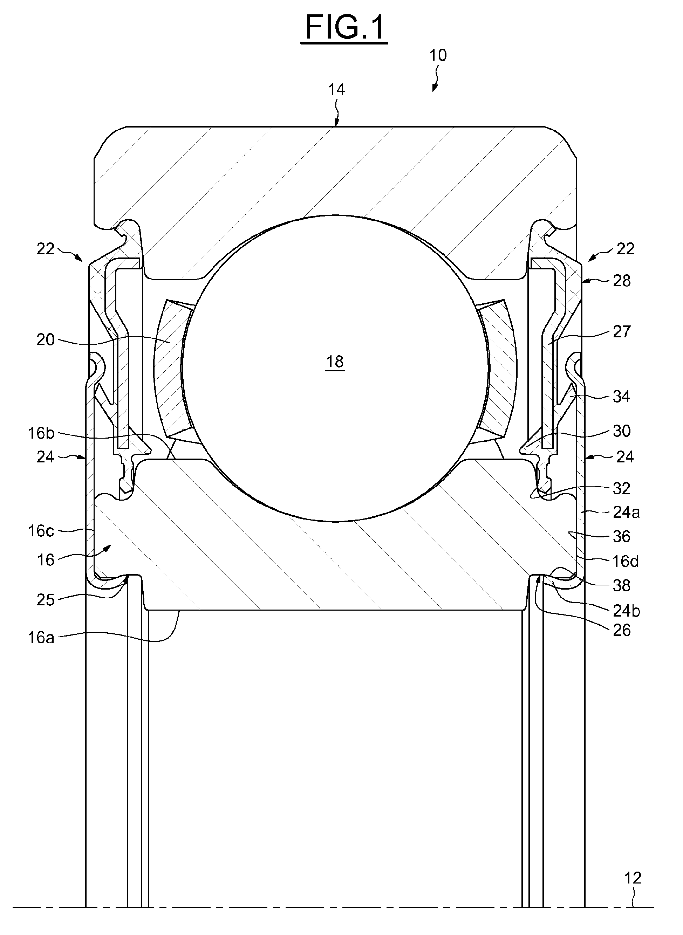

As illustrated on Figure 1, which illustrates an embodiment of a rolling bearing 10 according to an example of the invention, said rolling bearing, with an axis 12, comprises an outer ring 14, an inner ring 16, a plurality of rolling elements 18, which in this case are balls, interposed between the rings, and a cage 20 for maintaining said rolling elements circumferentially spaced apart. The rolling bearing 10 further comprises on each side an annular seal 22 and an annular sealing flinger or shield 24 to close the radial space that exists between the rings 14, 16.

The inner and outer rings 14, 16 are concentric and symmetric with respect to the transverse radial plane passing through the centre of the rolling bearing 10. The rings are of the solid type. One of the rings rotates while the other is fixed or also rotates.

The inner ring 16 comprises a cylindrical bore 16a and an outer cylindrical surface 16b from which a toroidal circular raceway for the rolling elements 18 is formed, said raceway being directed radially outwards. The inner ring 16 further comprises two opposite radial lateral frontal surfaces 16c, 16d which axially delimit the bore 16a and the outer surface 16b of said ring.

The inner ring 16 further comprises two annular recesses or grooves 25, 26 formed on the bore 16a. The groove 25, 26 is respectively situated in a radial plane containing a corresponding groove of the outer ring 14. The grooves 25, 26 are identical to one another. As will be described later, each groove 25, 26 is shaped in order to obtain a good and stable anchorage of the associated shield 24 on the inner ring.

Each seal 22 is arranged radially between the outer and inner rings 14 and 16, fixed to said outer ring and arranged laterally to the rolling elements 18. Each seal 22 is provided with a rigid insert or core member 27 made of metal or thermoplastic and with an elastic sealing member 28 made of rubber, synthetic resin, polymer or the like, which partially covers the core member 27. The sealing member 28 covers the core member 27 and forms two radially opposed peripheral sealing portions applying respectively a static sealing with the outer ring 14 and a dynamic sealing with the inner ring 16.

The inner sealing portion of the elastic member 28 is provided with first and second inner sealing lips 30 and 32, which are concentric with each other. The second lip 32 bears against a groove made on the outer surface of the inner ring. The first lip 30 delimits together with the inner ring 16 a labyrinth seal. The inner sealing portion further comprises an outer sealing lip 34 extending towards the outside of the rolling bearing 10 and bearing against an inner surface of the shield 24 to create a sealed axial chamber (not referenced). The chamber may define a tank for grease.

Each shield 24 is coupled to the inner ring 16. Each shield 24 has an annular cup form and is arranged laterally to the associated inner seal 22. The shields 24 may be formed from a rigid material. The shields 24 may be formed for example from a metal steel sheet or from another metallic material or from plastic material by molding.

Each shield 24 extends radially towards the outer ring 14 and comes into axial direct contact with the inner ring 16. Alternatively, a sealing element may be axially interposed between the inner ring 16 and each shield 24. Each shield 24 comprises an annular radial abutment portion 24a in contact with the associated radial surface 16c, 16d of the inner ring, and an annular inner anchorage portion 24b extending axially inwards from a small-diameter edge of said radial portion. The abutment portion 24a of each shield comprises an inner face 36 in contact with the associated radial surface 16c, 16d of the inner ring. The sealing lip 34 of the seal comes into friction contact with the inner face 36. The anchorage portion 24b of each shield is fixed into the associated groove 25, 26 of the inner ring, for instance by force-fitting. The anchorage portion 24b of each shield has an annular outer toroidal surface 38. In the illustrated example, the anchorage portion 24b has a bended form. In the illustrated example, the thickness of each shield 24 is constant.

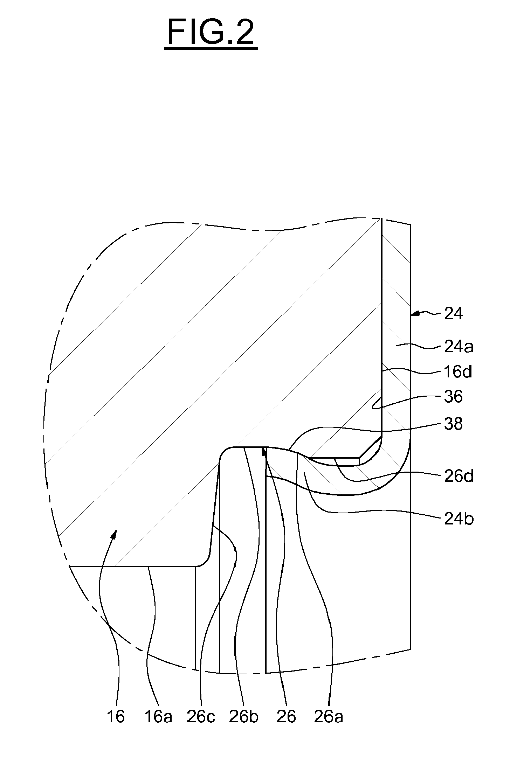

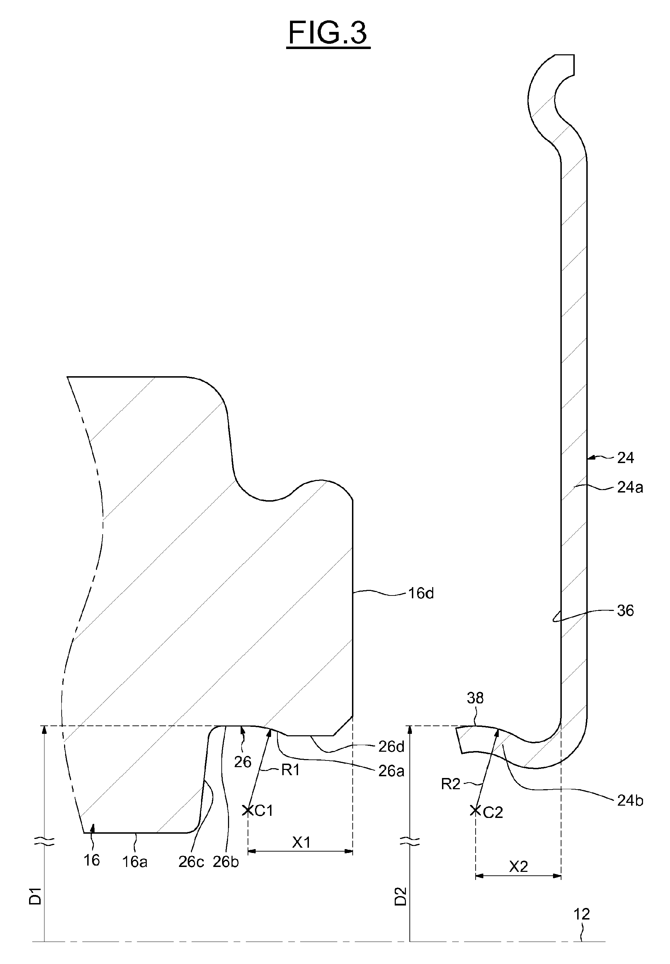

As shown more clearly on Figure 2, the groove 26 comprises an annular concave toroidal portion 26a and an inner cylindrical axial portion 26b extending axially inwards said toroidal portion. The toroidal portion 26a is axially offset inwards with respect to the frontal surface 16d of the inner ring. The toroidal portion 26a is oriented axially inwards. In this example, the toroidal portion 26a is oriented radially inwards. The toroidal portion 26a has in cross-section an arc of circle profile with a centre C1 and a radius R1 of curvature (Figure 3). The outer toroidal surface 38 of the anchorage portion 24b of the shield comes into contact with the toroidal portion 26a of the groove.

The inner axial portion 26b of the groove extends axially a large-diameter edge of the toroidal portion 26a. The groove 26 also comprises a radial wall 26c delimiting axially said groove and connected to the inner axial portion 26b axially on the side opposite to the toroidal portion 26a. The wall 26c extends radially inwards and is connected to the bore 16a of the inner ring.

The groove 26 further comprises an outer cylindrical axial portion 26d extending axially outwards the toroidal portion 26a on the side opposite to the inner axial portion 26b. The diameter of the outer axial portion 26d is smaller than the diameter D1 (Figure 3) of the inner axial portion 26b. In the illustrated example, the outer axial portion 26d extends the small-diameter edge of the toroidal portion 26a. Alternatively, a chamfer may be provided between said toroidal portion 26a and said axial portion 26d. The outer axial portion 26d is connected to the frontal surface 16d of the inner ring by a chamfer. In another embodiment, the outer axial portion 26d may extend directly from the frontal surface 16d.

As shown on Figure 3, in a free state of the shield 24, the outer surface 38 of the anchorage portion 24b has in cross-section an arc of circle profile with a centre C2 and a radius R2 of curvature.

To be able to absorb more manufacturing variations, the following rules of design have been determined by the inventors. The radius R2 of the anchorage portion 24b of the shield and the radius R1 of the toroidal portion 26a of the groove are defined by:

$$0.7 \leq \frac{R1}{R2} \leq 1.5.$$

The axial distance X1 between the frontal surface 16d of the inner ring and the centre C1 of the toroidal portion 26a of the groove of said ring, and the axial distance X2 between the inner face 36 of the shield and the centre C2 of the anchorage portion 24b in a free state of said shield are defined by:

$$0.9 \leq \frac{X1}{X2} \leq 1.8.$$

The diameter D2 of the anchorage portion 24b in a free state of the shield and the diameter D1 of the outer axial portion 26 of the groove of the inner ring are defined by:

$$0.9 \leq \frac{D2}{D1} \leq 1.1.$$

In the disclosed example, each shield is fixed on the inner ring. Alternatively, it could be possible to fix each shield on the outer ring. In this case, each anchorage groove is formed on the outer surface of the outer ring. In the disclosed example, the bearing is provided with two seals cooperating with the shields. Alternatively, the bearing may be deprived of such seals.

The invention has been illustrated on the basis of a rolling bearing provided with at least one row of rolling elements radially disposed between the inner and outer rings. Alternatively, the bearing may be a plain bearing or a sliding bearing comprising two rings.

**Claims**

1. Bearing comprising an inner ring (16), an outer ring (14) and at least one shield (24) provided with an anchorage portion (24b) fixed into a groove (26) formed on one of the rings, **characterized in that** said groove comprises a toroidal portion (26a) axially offset inwards with respect to a frontal surface (16d) of the said ring and in contact with the anchorage portion (24b) of the shield, and an inner axial portion (26b) extending inwards said toroidal portion.

2. Bearing according to claim 1, wherein the anchorage portion (24b) of the shield comprises a toroidal surface (38) in contact with the toroidal portion (26a) of said groove.

3. Bearing according to claim 2, wherein the radius (R1) of the toroidal portion (26a) of said groove and the radius (R2) of the anchorage portion (24b) of the shield in a free state of said shield are defined by:

$$0.7 \leq \frac{R1}{R2} \leq 1.5$$

4. Bearing according to claim 3, wherein said radii are equal.

5. Bearing according to claim 3 or 4, wherein the axial distance (X1) between the frontal surface (16d) of the said ring and the centre (C1) of the toroidal portion (26a) of said groove, and the axial distance (X2) between an inner face (36) of the shield and the centre (C2) of the anchorage portion (24b) in a free state of said shield are defined by:

$$0.9 \leq \frac{X1}{X2} \leq 1.8$$

6. Bearing according to any of the preceding claims, wherein the diameter (D2) of the anchorage portion (24b) in a free state of said shield and the diameter (D1) of the outer axial portion (25d) of said groove are defined by:

$$0.9 \leq \frac{D2}{D1} \leq 1.1$$

7. Bearing according to claim 6, wherein said diameters are equal.

8. Bearing according to any of the preceding claims, wherein said groove further comprises an outer axial portion (26d) extending outwards the toroidal portion (26a).

9. Bearing according to claim 8, wherein the outer axial portion (26d) extends directly from the toroidal portion (26a).

10. Bearing according to any of the preceding claims, wherein the shield (24) comprises a radial abutment portion (24a), the anchorage portion (24b) extending from said abutment portion axially towards said ring (16).

11. Bearing according to any of the preceding claims, wherein the radial abutment portion (24a) of the shield (24) is in axial direct contact with the frontal surface (16d) of the said ring.

**12.** Bearing according to any of the preceding claims, wherein the shield (24) is made in one part.

**13.** Bearing according to any of the preceding claims, further comprising at least an additional seal (22) mounted on the other ring and which applies a dynamic sealing with said ring.

**14.** Bearing according to claim 13, wherein said additional seal (22) comprises at least a lip (34) in friction contact with the shield.

## FIG.1

# FIG.2

# FIG.3

Europäisches
Patentamt

European
Patent Office

Office européen
des brevets

## EUROPEAN SEARCH REPORT

Application Number

EP 15 30 6663

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 519 316 A (GOTHBERG KARL EVALD ANDREAS) 7 July 1970 (1970-07-07) | 1-13 | INV. F16C33/78 F16C33/58 |
| Y | * figures 1, 7, 13 * | 14 | |
| X | FR 2 515 288 A1 (SKF CIE APPLIC MECANIQUE [FR]) 29 April 1983 (1983-04-29) | 1,8-13 | ADD. F16C19/06 |
| Y | * figures 1, 3 * | 14 | |
| X | DE 10 2010 051230 A1 (SCHAEFFLER TECHNOLOGIES GMBH [DE]) 16 May 2012 (2012-05-16) * figure 3a * | 1-11 | |
| X | SE 331 006 B (SKF SVENSKA KULLAGERFAB AB [SE]) 7 December 1970 (1970-12-07) * figures 1, 2 * | 1-3,5,6, 8-12 | |
| X | DE 17 50 844 A1 (SKF SVENSKA KULLAGERFAB AB) 30 September 1971 (1971-09-30) | 1-3,5-13 | |
| Y | * figures 1, 7, 13 * | 14 | TECHNICAL FIELDS SEARCHED (IPC) |
| X | FR 3 018 568 A1 (SKF AB [SE]) 18 September 2015 (2015-09-18) | 1-7, 10-12 | F16C |
| Y | * figure 1 * | 14 | |

The present search report has been drawn up for all claims

| Place of search | Date of completion of the search | Examiner |
|---|---|---|
| The Hague | 1 December 2015 | Vesselinov, Vladimir |

EPO FORM 1503 03.82 (P04C01)

## EP 3 156 673 A1

**ANNEX TO THE EUROPEAN SEARCH REPORT
ON EUROPEAN PATENT APPLICATION NO.**

EP 15 30 6663

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2015

| Patent document cited in search report | | Publication date | Patent family member(s) | | Publication date |
|---|---|---|---|---|---|
| US 3519316 | A | 07-07-1970 | FR 1568654 A<br>US 3519316 A | | 23-05-1969<br>07-07-1970 |
| FR 2515288 | A1 | 29-04-1983 | NONE | | |
| DE 102010051230 | A1 | 16-05-2012 | CN 103201528 A<br>DE 102010051230 A1<br>EP 2638302 A1<br>US 2013216171 A1<br>WO 2012062608 A1 | | 10-07-2013<br>16-05-2012<br>18-09-2013<br>22-08-2013<br>18-05-2012 |
| SE 331006 | B | 07-12-1970 | NONE | | |
| DE 1750844 | A1 | 30-09-1971 | BE 716579 A<br>CH 492895 A<br>DE 1750844 A1<br>ES 355044 A1<br>GB 1234047 A<br>NL 6808207 A | | 04-11-1968<br>30-06-1970<br>30-09-1971<br>01-03-1970<br>03-06-1971<br>17-12-1968 |
| FR 3018568 | A1 | 18-09-2015 | NONE | | |

EPO FORM P0459

For more details about this annex : see Official Journal of the European Patent Office, No. 12/82

## REFERENCES CITED IN THE DESCRIPTION

### Patent documents cited in the description

- WO 2011121385 A1